(19) Europäisches Patentamt
European Patent Office
Office européen des brevets

(11) EP 4 723 642 A1

(12) EUROPEAN PATENT APPLICATION

(43) Date of publication:
08.04.2026 Bulletin 2026/15

(51) International Patent Classification (IPC):
H04N 19/597 (2014.01)    G06T 9/00 (2006.01)
G06T 13/40 (2011.01)    G06T 17/00 (2006.01)

(21) Application number: 24306616.4

(22) Date of filing: 02.10.2024

(52) Cooperative Patent Classification (CPC):
H04N 19/597; G06T 9/001; G06T 9/002;
G06T 13/40

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(71) Applicant: InterDigital CE Patent Holdings, SAS
75017 Paris (FR)

(72) Inventors:
• SCHNITZLER, Francois
  56890 SAINT AVE (FR)

• LORANCHET, Guillaume
  35700 RENNES (FR)
• HELLIER, Pierre
  35235 THORIGNE-FOUILLARD (FR)
• MULTON, Franck
  35137 PLEUMELEUC (FR)
• BOUKHAYMA, Adnane
  35000 RENNES (FR)

(74) Representative: Vossius & Partner
Patentanwälte Rechtsanwälte mbB
Siebertstraße 3
81675 München (DE)

(54) IDENTITY INFORMATION FOR SKINNING NETWORK AND/OR OCCUPANCY NETWORK ENCODED IN BITSTREAM

(57)    A method of encoding a surface of a non-rigid articulated object. The method includes signaling identity vector information in an encoded bitstream, the identity vector information including one of an identity vector or an instruction to use a pre-existing identity vector, the identity vector and the pre-existing identity vector are individually configured to condition a skinning network, an occupancy network, or both.

FIG. 1

**Description**

**BACKGROUND**

The present disclosure relates generally to video coding. More specifically, examples described herein relate to encoding and decoding identity information for conditioning a skinning network and/or an occupancy network.

**BRIEF SUMMARY**

Briefly stated, in one embodiment, a method of encoding a surface of a non-rigid articulated object. The method including signaling identity vector information in an encoded bitstream, the identity vector information including one of an identity vector or an instruction to use a pre-existing identity vector, the identity vector and the pre-existing identity vector are individually configured to condition a skinning network, an occupancy network, or both.
In another embodiment, a method of decoding a surface of a non-rigid articulated object. The method including decoding identity vector information in an encoded bitstream, the identity vector information including one of an identity vector or an instruction to use a pre-existing identity vector, the identity vector and the pre-existing identity vector are individually configured to condition a skinning network, an occupancy network, or both.

**BRIEF DESCRIPTION OF THE DRAWINGS**

The following detailed description will be better understood when read in conjunction with the appended drawings, in which there are shown examples of one or more of the multiple embodiments of the present disclosure. It should be understood, however, that the embodiments described herein are not limited to the precise arrangements and instrumentalities shown in the drawings. In the drawings:

FIG. 1 is a block diagram illustrating an example system according to one or more embodiments of the present disclosure;
FIG. 2 is a block diagram illustrating an example video encoder according to one or more embodiments of the present disclosure;
FIG. 3 is a block diagram illustrating an example video decoder according to one or more embodiments of the present disclosure;
FIG. 4 is a diagram that illustrates a neural network used for implicit neural representation (INR);
FIG. 5 is a diagram that illustrates a comparative process to encode a signal using an INR;
FIG. 6 is a diagram that illustrates a neural architecture for an INR variant (Hybrid INR);
FIG. 7 is a flow diagram illustrating a comparative example of Fast-SNARF;
FIG. 8 is a flow diagram illustrating a comparative example of predicting the skinning weight for a three-dimensional point with Fast-SNARF;
FIG. 9 is a flow diagram illustrating an example process of predicting the weights of a fix number of points located on a voxel grid;
FIG. 10 is a flow diagram illustrating an example process of finding a point in canonical space corresponding to a given point in pose space;
FIG. 11 is a diagram illustrating a comparative example of an occupancy prediction;
FIG. 12 is a flow diagram illustrating an example of a skinning network that predicts a set of bone transformation for a point in three-dimensions according to one or more embodiments of the present disclosure;
FIG. 13 is a flow diagram illustrating an example of an occupancy network according to one or more embodiments of the present disclosure;
FIG. 14 is a flow diagram illustrating a method of encoding a surface of a non-rigid articulated object according to one or more embodiments of the present disclosure; and
FIG. 15 is a flow diagram illustrating a method of decoding a surface of a non-rigid articulated object according to one or more embodiments of the present disclosure.

**DETAILED DESCRIPTION**

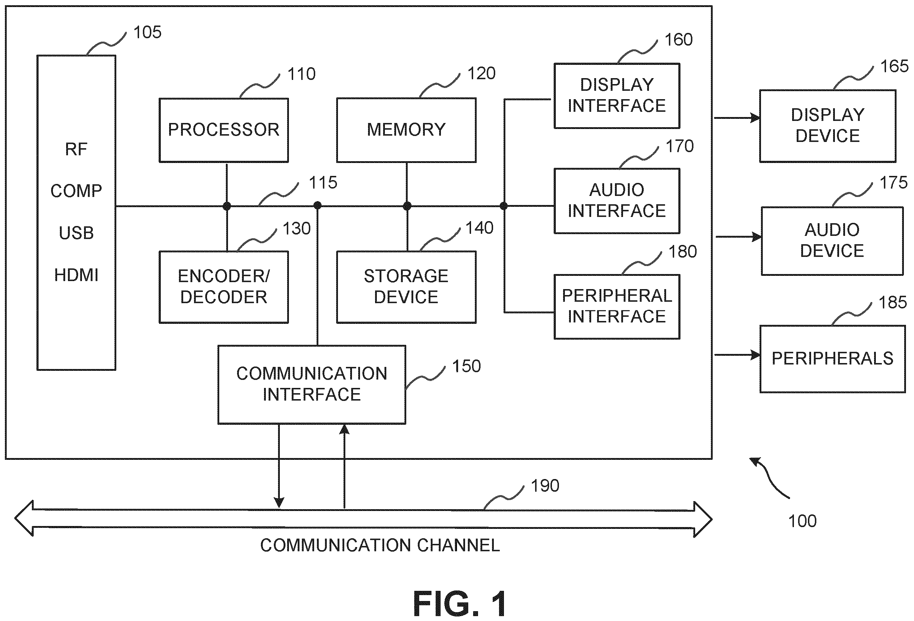

In describing the various embodiments of the present disclosure, certain terminology is used herein for convenience only and should not be considered as limiting such embodiments. In the drawings, the same reference numerals are employed for designating the same elements throughout the several figures and the present description.
Referring to the drawings, there is shown in FIG. 1 a block diagram illustrating an example system 100 in which embodiments of the present disclosure can be implemented. The system 100 may be an electronic device including, for example, a personal computer, laptop computer, mobile phone, tablet computer, multimedia set-top box, digital television receiver, personal video recording system, connected home appliance, vehicle control and/or entertainment system, and server. One or more elements of the system 100, singly or in combination, may be implemented as an integrated circuit (IC), multiple ICs, and/or discrete components. For example, in one embodiment, the processing, encoding and/or decoding elements of system 100 are distributed across multiple ICs and/or discrete components. In some embodiments, the system 100 is communicatively coupled to and/or in communication with other systems or devices, via, for example, a communications bus or dedicated input/output ports.

One or more of the elements of system 100 may be provided within an integrated housing, with such elements being interconnected and able to transmit data therebetween using any suitable connection arrangement 115 generally known in the art, including, for example, an internal bus (e.g., I2C bus), wiring, and printed circuit boards.

The system 100 includes at least one processor 110 configured to execute instructions for implementing the embodiments described herein, including signal/data coding and processing. The processor 110 may be a general-purpose processor or microprocessor, digital signal processor (DSP), one or more microprocessors in association with a DSP core, a controller, a microcontroller, application specific integrated circuits (ASICs), field programmable gate arrays (FPGAs), a state machine, and the like. The processor 110 may include at least one central processing unit (CPU), embedded memory, input and output interfaces, and other circuitries.

The system 100 includes at least one memory 120, for example, a volatile memory device and/or a non-volatile memory device. The system 100 includes a storage device 140, that may be or include non-volatile memory and/or dynamic volatile memory, including EEPROM, ROM, PROM, RAM, DRAM, SRAM, DDR, flash, magnetic disk drives, solid state drives (SSD) and/or optical disk drives. The storage device 140 may be or include, for example, an internal storage device, an attached storage device, and/or a network accessible storage device. Although shown separately, the memory 120 and the storage device 140 may be collocated, integrated together, or otherwise combined.

The system 100 includes an encoder/decoder module 130 configured to process video data and to provide encoded video data or decoded video data. The encoder/decoder module 130 may include one or more processors and/or memory (not shown). Although FIG. 1 depicts the encoder/decoder module 130 as a separate element of system 100, it will be understood that the processor 110 and the encoder/decoder module 130 may be collocated and/or integrated together as a combination of hardware and/or software, e.g., in an electronic package or chip. The encoder/decoder module 130 may be or include one or more modules that may be included in one or more separate devices that perform encoding and/or decoding functions.

Instructions for execution by the processor 110 and/or the encoder/decoder module 130 may be stored in the storage device 140 and subsequently loaded into memory 120 for execution by the processor 110. In some embodiments, one or more of processor 110, memory 120, storage device 140, and encoder/decoder module 130 may store one or more items when performing the processes disclosed herein. Such items may include input video, decoded video, or portions thereof, bitstreams, matrices, variables, operational logic, and intermediate and/or final results from processing of equations, formulas, or operations.

In some embodiments, the memory of the processor 110 and/or the encoder/decoder module 130 is used to store instructions and/or provide working memory for video encoding and decoding functions. In some embodiments, memory external to the processor 110 and/or the encoder/decoder module 130 (e.g., the memory 120 and/or the storage device 140) is used for one or more of these functions and/or, for example, to store the operating system of a television.

The system 100 may obtain or receive information via one or more input devices, interfaces, and/or ports as indicated in input block 105. Examples of the input devices include a radio frequency (RF) device for transmitting and/or receiving RF signals over various media, for example, RF signals received over the air from a broadcaster; component video (COMP) inputs; a Universal Serial Bus (USB) input; and/or a High-Definition Multimedia Interface (HDMI) input. Other examples include composite video input (not shown). In some embodiments, the input devices are associated with respective input processing elements, e.g., those generally known in the art. For example, the RF device may be associated with elements suitable for selecting a desired frequency (e.g., selecting or band-limiting a signal) or performing error correction on the signal. The USB and/or HDMI inputs may include respective interface processors and transceivers (or transmitters and receivers) for coupling the system 100 to other devices via USB and/or HDMI ports or connections. Various forms of input processing may be implemented, for example, by and/or within a separate input processing device or the processor 110.

The system 100 includes a communication interface 150 that enables wired and/or wireless communication with other devices, e.g., via a communication channel 190. The communication interface 150 may include one or more transceivers, modems, network cards and the like. The communication channel 190 may be or include wired and/or wireless mediums.

In some embodiments, data may be streamed to the system 100 via wired and/or wireless networks. Examples of such wireless networks include cellular, Bluetooth or Wi-Fi (e.g., IEEE 802.11) networks. The wired and/or wireless networks may include one or more base stations (e.g., cellular base stations, access points, etc.), and/or user equipment (e.g. cellular user equipment, stations, etc.), and/or other network elements that communicate with the system 100 via the communication interface 150 and communication channel 190, whereby the system 100 may obtain data streamed from streaming applications (e.g., OTT services) via various networks, including the Internet. In some embodiments, data is streamed to the system 100 via the input block 105 (e.g., using a set-top box that delivers data via the HDMI connection or the RF connection). In some embodiments, data is received by the system 100 in a non-streaming manner.

The system 100 may provide one or more output signals to one or more output devices. The output devices may include a display device 165 (e.g., touchscreen display, monitor, etc.), an audio device 175 (e.g., speakers), and other peripheral devices 185, including, for example, a stand-alone DVR, a disk player, a stereo system, a lighting system, and other devices that provide a function based on the output of the system 100. The display device 165 can be for a television, tablet, laptop, mobile phone, head-mounted display, or other device. In some embodiments, control signals are communicated between the system 100 and the display device 165, the audio device 175, and/or the peripheral devices 185, enabling device-to-device control with or without user intervention. The output devices may couple to and/or communicate with the system 100 via dedicated connections via respective display, audio, and peripheral interfaces 160, 170, 180. Alternatively, the output devices may couple to and/or communicate with the system 100 via the communication channel 190 and the communication interface 150.

The display device 165 and the audio device 175 may be collocated, integrated, or otherwise combined with the other components of system 100 in a single unit (e.g., a television). Alternatively, the display device 165 and the audio device 175 may be separate from one or more of the other components of the system 100. In embodiments in which the display device 165 and the audio device 175 are external components, the output signals may be provided via dedicated outputs and/or connections, including, for example, HDMI ports, USB ports, or COMP outputs.

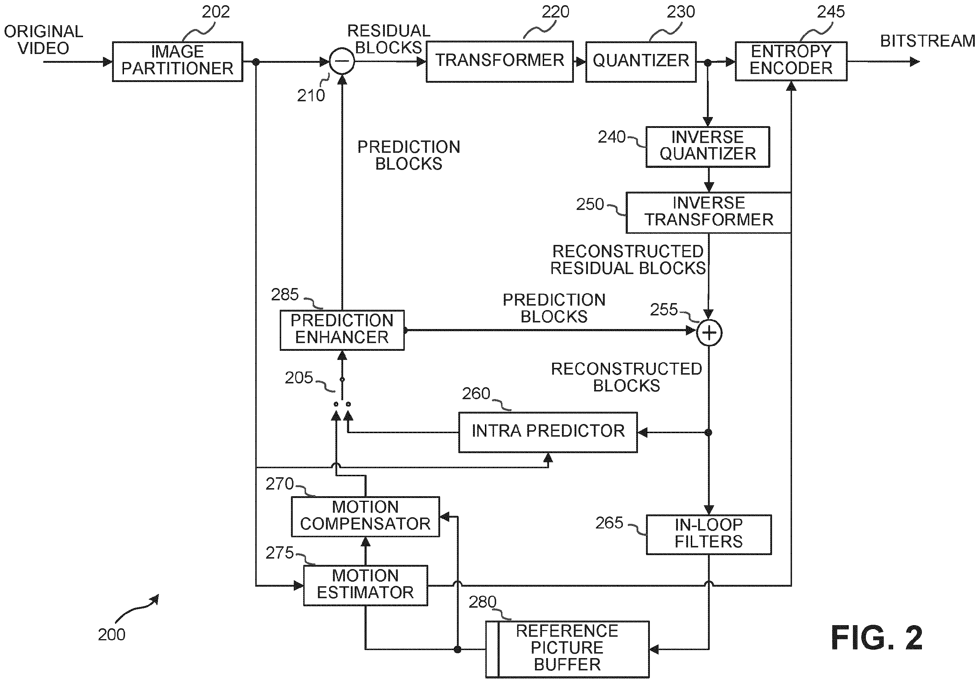

FIG. 2 is a block diagram illustrating an example video encoder 200 that may be employed by the system 100 (e.g., via the encoder/decoder module 130) described with respect to FIG. 1. The video encoder 200 may be an encoder that employs video compression technologies, standards, specification, or protocols, including Advanced Video Coding (AVC, H.264/MPEG-4), High Efficiency Video Coding (HEVC, H.265), Versatile Video Coding (VVC, H.266), Essential Video Coding (EVC, MPEG-5), AOMedia Video 1 (AV1), VP9, or the Enhanced Compression Model (ECM), and variations or improvements thereof. Those skilled in the art will understand that the various embodiments described herein are not limited to a specific standard and can be applied to other standards and recommendations, as well as extensions thereof.

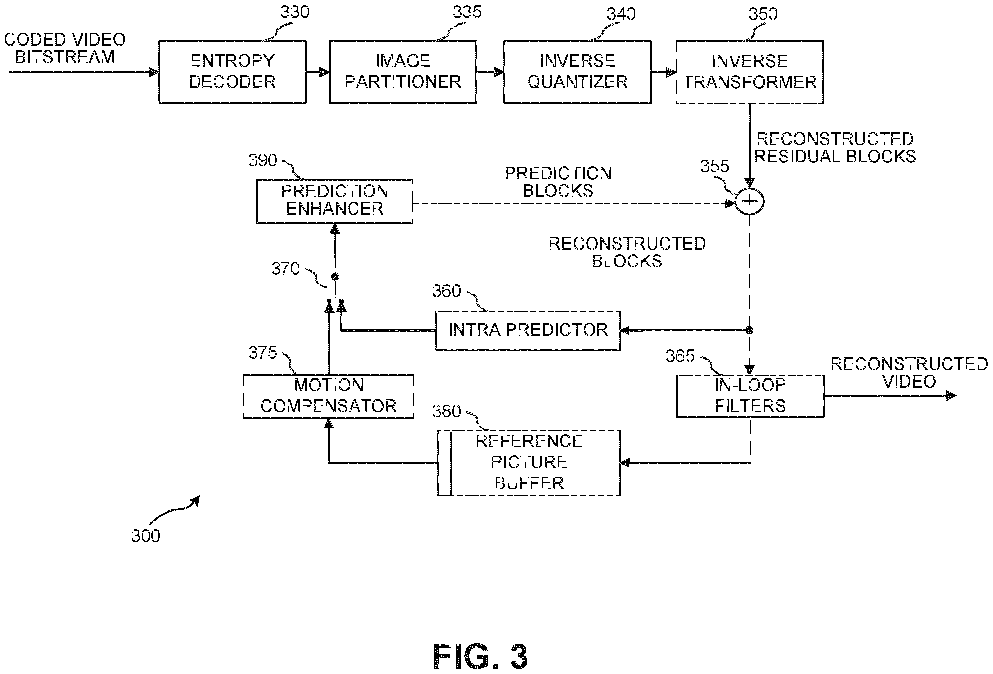

Some embodiments disclosed herein are described with reference to a coding unit (CU) or block of a video frame (or a video image or picture) to which coding tools may be applied by the video encoder 200 and/or by the video decoder 300 (described below with reference to FIG. 3). Generally, embodiments described herein may be applied to a video region formed by a video partition of any shape or size. The video region may be a video slice, a coding tree unit (CTU), or a CU (to which inter prediction or intra prediction can be applied), or a partition thereof, each of which can include samples of a luma component, $Y$, and chroma components, $U$ and $V$ (also denoted herein by C).

Referring generally to FIG. 2 and the video encoder 200, video data (e.g., one or more video frames) is encoded generally as described below. Prior to encoding, video data may be preprocessed by a precoding processor (not shown). The pre-processing may include, for example, applying a color model transform to the input color components of the input video data (e.g., conversion from RGB 4:4:4 to YUV 4:2:0) or mapping the color components of the input video data to obtain a signal distribution that is more resilient to compression (for instance, applying a histogram equalizer and/or a denoising filter to one or more of the video data's color components). The pre-processing may include associating metadata (for example, a supplemental enhancement information (SEI) message) with the video data that can be attached to a coded video bitstream. After pre-processing, if any, an image (frame) to be encoded is partitioned into CUs (blocks) by an image partitioner 202.

In general, a CU includes a luma block and associated chroma blocks. As such, functions of the video encoder 200 described herein as applied to a CU refer generally to the luma block and the respective chroma blocks. The CUs may be encoded using an intra prediction mode performed by an intra predictor 260. In intra prediction mode, the content of a CU in a frame is predicted based on content from one or more other CUs of the same frame (or region), using reconstructed blocks of other CUs output from an adder 255. The CUs may also or alternatively be encoded using an inter prediction mode, in which motion estimation and motion compensation are performed by a motion estimator 275 and a motion compensator 270, respectively. In inter prediction mode, the content of a CU in a frame is predicted based on content from one or more reconstructed areas of reference frames, available from a reference picture buffer 280.

The video encoder 200 selects or otherwise determines at 205 which prediction mode (intra prediction mode and/or inter prediction mode) to use for encoding a CU. The selected prediction mode may be enhanced (e.g., filtered) by a prediction enhancer 285. Based on the selected mode, a prediction for the CU is generated. A residual block is determined based on the prediction (i.e., prediction block, predicted CU) and the input CU. In some embodiments, such determination is made by a subtractor 210.

The residual block or a partition thereof (e.g., a transform block) is transformed into transform coefficients by a transformer 220. The transform coefficients are quantized by a quantizer 230. An entropy encoder 245 performs entropy encoding of the quantized transform coefficients and coding parameters (e.g., syntax elements including motion vectors and other control data) to form a bitstream of coded video data.

In addition to coding the original video blocks as described herein, the video encoder 200 reconstructs the coded blocks to provide references for future predictions. Thus, quantized transform coefficients (from the quantizer 230) are de-quantized by an inverse quantizer 240, and inverse transformed by an inverse transformer 250, to reconstruct (decode) the residual blocks. The reconstructed residual blocks and prediction blocks are combined (e.g., by the adder 255) to form reconstructed blocks. Thus, the video encoder 200 performs decoding operations through which the encoded images (frames) are reconstructed.

In-loop filters 265 may be applied to the reconstructed image (formed by the reconstructed blocks). The filtered reconstructed image(s) are stored in the reference picture buffer 280 and used by the motion estimator 275 and motion compensator 270, as explained above. The in-loop filters 265 can be applied to the reconstructed samples of an image to reduce distortions introduced by the encoding process. For example, a deblocking filter (DBF), bilateral filter (BIF), sample adaptive offset (SAO), and/or adaptive loop filter (ALF) can be applied to reduce encoding artifacts.

FIG. 3 is a block diagram illustrating an example of video decoder 300 that may be employed by the system 100 (e.g., via the encoder/decoder module 130) described with respect to FIG. 1. Generally, operational features of the video decoder 300 are reciprocal to operational features of the video encoder 200. In the video decoder 300, a coded video bitstream (e.g., generated by the video encoder 200 or another video encoding device or process) is entropy-decoded by an entropy decoder 330 to obtain transform coefficients, motion vectors, and other coding parameters. Based on the coding parameters, an image partitioner 335 divides the picture accordingly. The quantized transform coefficients are de-quantized by an inverse quantizer 340 and inverse transformed by an inverse transformer 350 to decode (reconstruct) respective residual blocks. Depending on the selected prediction mode, a predicted block can be obtained at 370 from an intra predictor 360 (i.e., intra prediction) or from a motion compensator 375 (i.e., inter prediction) and may be enhanced (e.g., filtered) by a prediction enhancer 390, generating a prediction block. The reconstructed residual blocks are combined with prediction blocks (e.g., by an adder 355), resulting in reconstructed blocks.

In-loop filters 365 (e.g., DBF, BIF, SAO, and/or ALF) can be applied to the reconstructed image (formed by the reconstructed blocks), to output reconstructed (decoded) video. The filtered reconstructed image is also stored in a reference picture buffer 380 for reference by the motion compensator 375.

A post-decoding processor (not shown) can process the reconstructed video data. For example, post-decoding processing can include an inverse color model transform (e.g., conversion from YUV 4:2:0 to RGB 4:4:4) or an inverse mapping to reverse the mapping process performed by the pre-encoding processor described with respect to FIG. 2. The post-decoding processor can use metadata derived by the pre-encoding processor and/or signaled in the video bitstream.

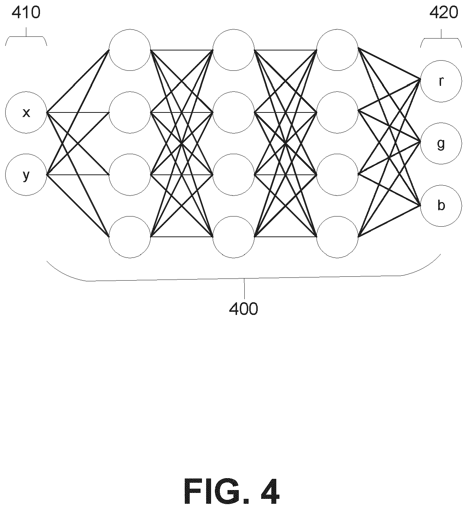

FIG. 4 is a diagram that illustrates a neural network used for implicit neural representation (INR). Such a neural network used for INR can be referred to as an INR network. INR parameterizes a signal as a function 400, which takes coordinates 410 as input and outputs values 420 of a signal at these coordinates. Among other applications, INR can be applied to images, videos, or 3D objects, such as, for example, avatars. In the image case, the inputs 410 may be pixel coordinates (x, y) and the INR may output 420 the color values (r, g, b) or (y, u, v) of the input pixel. The input coordinates may be modified by a transformation before being used as input for the neural network. This transformation may be a Fourier mapping, coordinate transformation, normalization, etc.

The INR may be used to reconstruct a signal by computing the signal values for every coordinate input. The INR may be used to up-sample a signal by generating output for input coordinates corresponding to the up-sampled pixels, for example the mean of the coordinates between two consecutive pixels for up-sampling by a factor of 2.

An INR network 400 may be a neural network, composed of multiple neural layers, such as fully connected layers. In FIG. 4, as one non-limiting example, the INR network 400 has four layers. Intermediate outputs are represented by circles. Each neural layer may be described as a function that first multiplies the input by a tensor, adds a vector called the bias and then applies a nonlinear function on the resulting values. The shape (and other characteristics) of the tensor and the type of non-linear functions are called the architecture of the network. The values of the tensor and the bias are denoted by the term "weights". The weights and, when applicable, the parameters of the non-linear functions, are called the parameters $\theta$ of the network. The architecture and the parameters define a "model". $f_\theta$ denotes an INR function parameterized by $\theta$.

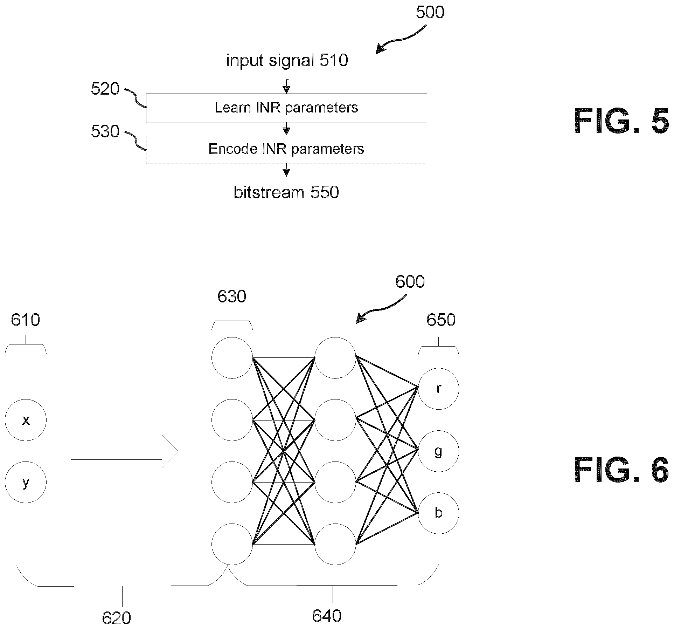

FIG. 5 is a diagram that illustrates a comparative process 500 to encode a signal 510 using an INR. This encoding is done by optimizing the weights $\theta$ (or a subset of them) of the INR network to reconstruct the signal 520 and optionally encoding INR parameters 530 to create the output bitstream 550. For an image I of size (M $\times$ N), the weights $\theta$ may be optimized by minimizing the following loss function (1):

$$(1) \quad \mathrm{Loss} = \mathrm{D}(\mathrm{I},\, f_\theta) + \lambda\, \mathrm{R}(\theta),$$

where D is a distortion which quantifies the difference between the reconstructed image by $f_\theta$ to the original image I, R is the bitrate of the encoded parameters, and $\lambda$ is a trade-off parameter between D and R. D may be any differentiable distortion measure, such as mean squared error as defined by expression (2):

$$(2) \quad D_{MSE} = \frac{1}{MN} \sum_{x,y} \left( I(x,y) - f_\theta(x,y) \right)^2,$$

M and N are the width and height of an image. Other metrics such as LPIPS (learned perceptual image patch similarity) may also be used in this case. The optimization of the weights θ is typically performed by a machine learning approach such as a batch gradient descent method.

To decompress the signal, $f_\theta$ is evaluated at all relevant coordinates. These coordinates may be selected at decoding. One choice may be selecting all pixel coordinates for an image or video. As an example, for a 256×256 pixel image, these coordinates could be all pairs (x, y) for all x ∈ 0,1, ...,255 and y ∈ 0,1, ...,255. Other choices are possible, for example, to up-sample, down-sample, or extend the original image.

The bitstream encoding a signal is thus created by encoding the weights of the neural network. This may be performed by a neural compression codec such as Neural Network Coding (NNC)/ ISO/IEC 15938-17 or MPEG-7 part 17 or simply by quantizing the weights and/or pruning some neurons from the network.

FIG. 6 is a diagram that illustrates a neural architecture 600 for an INR variant (Hybrid INR). In this variant, the input coordinates 610 are first mapped to a vector of latent features 630. Such a mapping 620 may, for example, rely on a lookup table, a partition of the signal, a hash function and/or a linear combination of features. These features may then be up-sampled and then used as input for an INR synthesis network 640 that outputs the value 650 of the signal for the input coordinates 610. Using such an architecture rather than a plain INR network helps to handle local features of the input signal. Indeed, the features for a given location may be completely or mostly independent from features at other coordinates and thus can be tailored to each location.

Methods to animate implicit characters usually decompose the process into two parts: a rigid articulation based on linear blend skinning and the implicit body prediction. To help the convergence of the implicit network, most methods first animate rigidly the body into a canonical space via linear blend skinning while the implicit network only has to model non-linear pose-dependent deformations. More precisely, a multitude of points are sampled in the pose space. The multitude of points are first mapped to the canonical space with the inverse linear blend skinning. For each sample point, several canonical correspondences may be found for regions with self-contact. The implicit network predicts for each sample point either the occupancy (when the point is inside or outside the mesh) or a signed distance to the mesh (e.g., using a signed distance function (SDF)). Finally, when multiple correspondences occur, the results are aggregated into a single answer (for example, via the max operator). The outcome may be visualized with volumetric rendering or converted to a mesh via, for example, marching cubes algorithms.

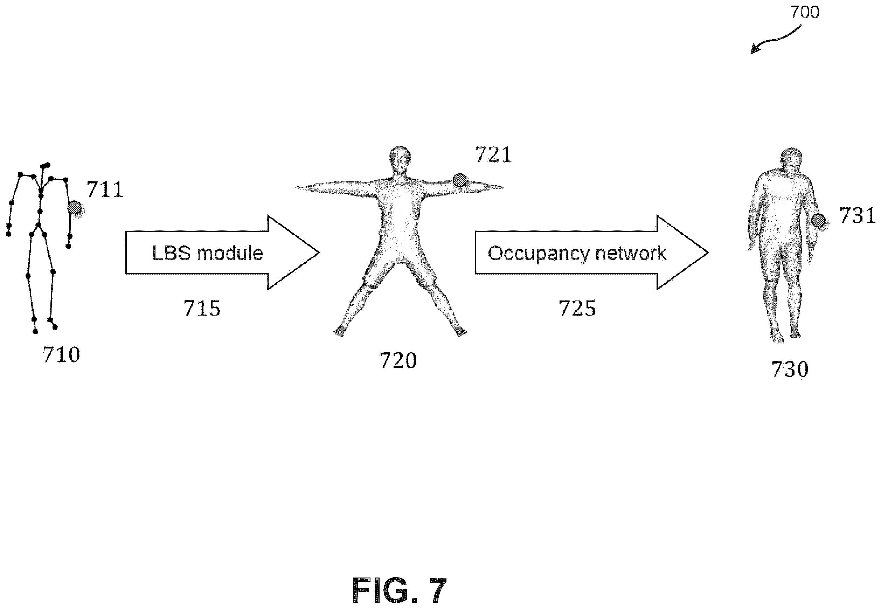

Fast-SNARF is one example of an implicit network that relies on two neural networks. FIG. 7 is a flow diagram illustrating a comparative example 700 of Fast-SNARF. As illustrated in FIG. 7, to generate the implicit surface of a pose using the skeleton as input, the first network, the Linear Blend Skinning (LBS) network, S, is used in the LBS module 715 to predict skinning weights (i.e., the weight that each bone should have on the final transformation), which allows mapping of any point (e.g., 711) in pose space (defined by the skeleton 710) to the corresponding point 721 in the canonical pose, which is the default avatar pose. Then, the second network, the occupancy network 725, predicts whether any point 721 in the canonical space 720 is inside or outside the body of the avatar, which indicates whether the corresponding point 731 is inside or outside the avatar 730.

Any point in canonical space is associated with *n* weights for the *n* body joints. Each canonical point is then deformed by a weighted sum of all the bone transformations.

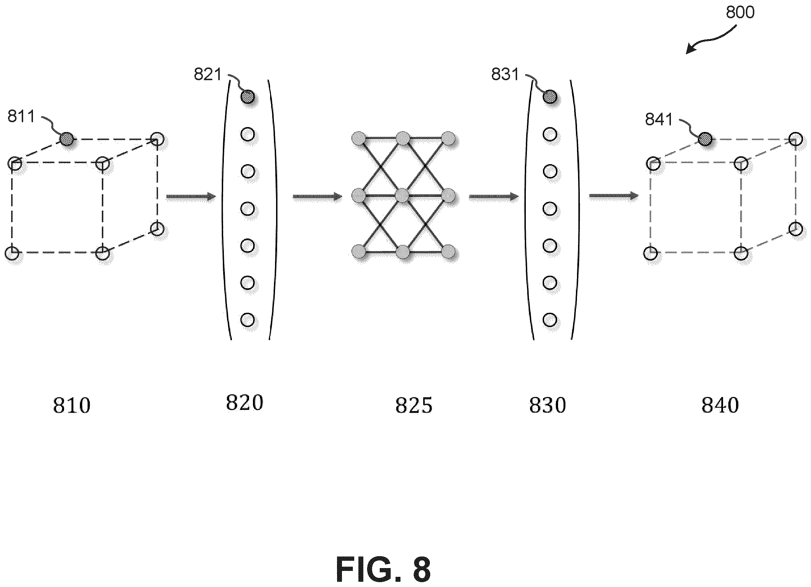

The network S predicts the skinning weight for a point in three dimensions. FIG. 8 is a flow diagram illustrating a comparative example 800 of predicting the skinning weight for a three-dimensional point with Fast-SNARF. As illustrated in FIG. 8, a set of points (e.g., point 811) in skeleton space 810 may be used as input 820 (coordinates 821 are the coordinates of point 811) of a neural network 825. The neural network 825 outputs the corresponding LBS weights 830 of these points (LBS weight 831 for the example point 811). These LBS weights correspond to the weights 840 at these positions in space (weight 841 for the example point 811).

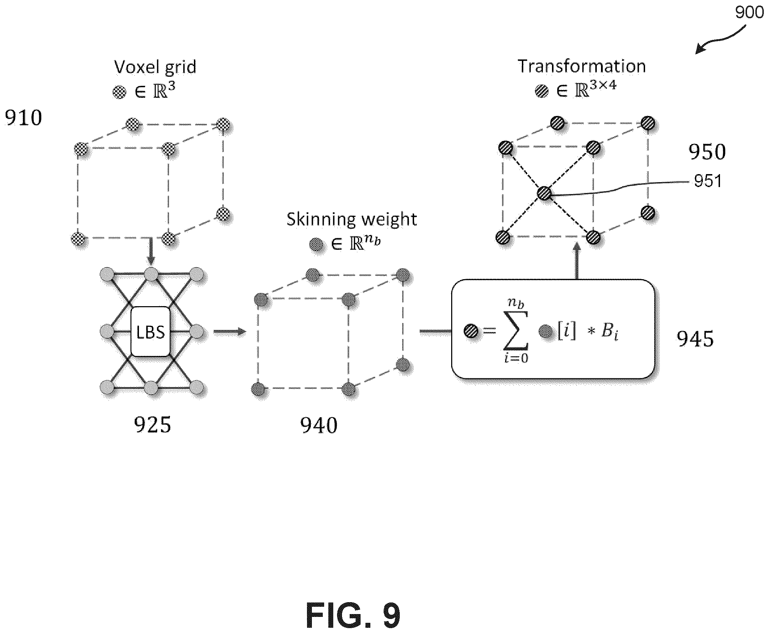

However, the example 800 requires querying the neural network 825 for every point, for every frame, both for the training and for the inference. To speed up this process, Fast-SNARF only predicts the weights of a fix number of points located on a voxel grid. For example, FIG. 9 is a flow diagram illustrating an example process 900 of predicting the weights of a fix number of points located on a voxel grid. As illustrated in FIG. 9, the transformation of any canonical point $x_c \in R^3$ (951) may be trilinearly interpolated based on the transformation of points of a grid (950). The skinning weights (940) are first computed by the LBS network (925) from the coordinates of the grid points 910. As the trilinear interpolation and the transformation T are both a linear operation, the transformation for each grid point may be precomputed (945) and store the result. The resulting transformation defined by expression (3) may be interpolated (951) for a given point to find the new position:

$$(3) \quad S_\phi : R^3 \times Z \rightarrow R_b^n$$

$$x, \beta \mapsto w$$

More precisely, given the skinning network S and the set of bone transformations B = {B_1, ..., B_{n_b} |B_i ∈ SE(3) } with n_b the number of bones, the transformation may be defined by expression (4):

$$(4) \quad T : R^3 \rightarrow SE(3)$$

$$x, B \mapsto: \sum_{i=0}^{n_b} S(x; \beta)_i \cdot B_i$$

From the expression (4), the position of x_c in pose space may be determined by replacing the transformation at x_c with its trilinear interpolation as defined by expression (5):

$$(5) \quad x_p = T(x_c) \cdot x_c$$

$$= \mathrm{Trilerp}\big(T(\mathcal{N}_1), \dots, T(\mathcal{N}_8)\big) \cdot x_c$$

With $\mathcal{N}_i$ the i-th neighbour of $x_c$.

The above transformation maps points from canonical space to pose space. However, this function is not invertible (from pose space to canonical space) as the above transformation is not bijective, i.e., one posed point may have several canonical points in case of self-contact.

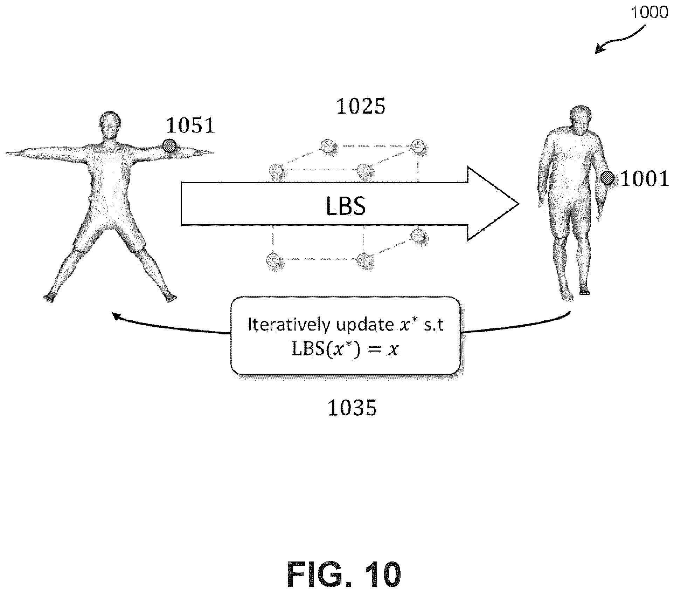

Accordingly, FIG. 10 is a flow diagram illustrating an example process 1000 of finding a point in canonical space corresponding to a given point in pose space. As illustrated in FIG. 10, the point 1051 in canonical space corresponding to a given point 1001 in pose space may be found by iteratively defining the following function for a query point $x_p$ as set forth in expression (6):

$$(6) \quad f(x_c) = T(x_c) \cdot x_c - x_p,$$

where T is the LBS network 1025.

With expression (6), it is possible to find the multiple solutions to $f(x_c) = 0$ with any Quasi Newton algorithm 1035, by initializing the algorithm from different starting points. Fast-SNARF choses to select one point per body part and rigidly deform the point to the canonical space.

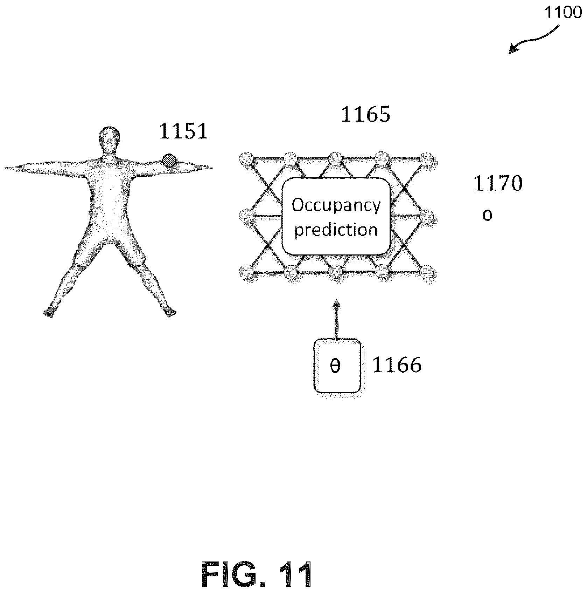

After the canonical correspondences {$x_1$, ... $x_n$} are found (there should only be several canonical roots when body parts are self-intersecting) for each point in the pose space, each point in the canonical space has an occupancy probability predicted by the occupancy neural network $\mathcal{O}_\psi$. FIG. 11 is a diagram illustrating a comparative example 1100 of an occupancy prediction. As illustrated in FIG. 11, the occupancy network 1165 is conditioned on a Skinned Multi-Person Linear Model (SMPL) pose parameter 1166, which is a latent representation of the pose of a character and is composed of the rotation vectors of each bone and hence has a size $3 \cdot n_b$. The result for the occupancy 1170 of a point 1151 in canonical space is given as the maximum of the previous occupancy. A binary cross entropy loss is taken with the ground truth occupancy. Finally, both networks are trained jointly as defined by expression (7):

$$(7) \quad \mathcal{O}_\psi : R^3 \times \mathcal{Y} \rightarrow R$$

$$x, \theta \mapsto : o$$

The gDNA approach is another method to generate three-dimensional clothed human avatars. The gDNA approach may also be used to fit three-dimensional scans. The gDNA approach is also based on previous architectures like Fast-SNARF, that could already generalize implicit avatars to unseen poses by conditioning the generation of an implicit function on a pose parameter (in the case of Fast-SNARF, the pose parameter is the position of the skeleton expressed as vector rotation for each joint).

Compared to Fast-SNARF, the gDNA approach uses other conditioning parameters: one for the shape, one for the clothes details, and one for the morphology (scale/size) analogous to the SMPL's beta parameter. More precisely, the gDNA occupancy network (conditioned on the shape) also predicts a feature vector. This feature vector and the cloth detail parameter condition a third network: a normal network that outputs a normal map to improve the quality of high frequencies. In the LBS part, gDNA uses two neural networks instead of one as used in Fast-SNARF. The gDNA approach first uses an additional warping network (conditioned on beta) to map all different people to the same neutral space. Then, the gDNA approach uses a LBS network, similar to Fast SNARF, but conditioned on the shape parameter, to predict the skinning weight field in this neutral space.

The shape parameter is a vector correlated with identity, pose, and clothes. The shape parameter is obtained during training for a particular clothed individual and pose. The clothes details parameter is details about shape of clothes.

The morphology parameter is the SMPL beta parameters and the pose parameter is the SMPL pose parameters. The morphology parameter is used as an input for the additional warping network in gDNA that maps point from an individual person canonical space to a point in a canonical space for a generic person, e.g., to account for different height or bone length. Therefore, in gDNA, the canonical shape network only models shape variation beyond SMPL.

Fast-SNARF uses one specific implicit neural model (both the occupancy and the LBS network) per identity. This limits the generalization and requires transmitting and/or loading a new network in memory whenever an avatar for a new person is displayed.

gDNA may generate an avatar for any identity with the same two networks. However, gDNA needs an additional mapping network to account for the change of identity rather than just the two networks of Fast-SNARF, leading to transmission and/or memory overhead and slower inference.

A method of the present disclosure generates an implicit avatar using only two fixed neural networks for any identity, by conditioning the skinning network and/or the occupancy network on an identity latent code $\beta \in Z \subset R^m$. In some embodiments, only one of these networks may be conditioned on $\beta$. Further, unlike the gDNA approach, the method of the present disclosure does not need an additional mapping network to account for the change of identity and the identity vector of the present disclosure is independent of the pose and is shared for all poses. Additionally, the additional network increases complexity and training, which requires more processing resources relative to the method of the present disclosure. For comparison, the method of the present disclosure may have 522,000 parameters while gDNA has at least 1.6 million parameters.

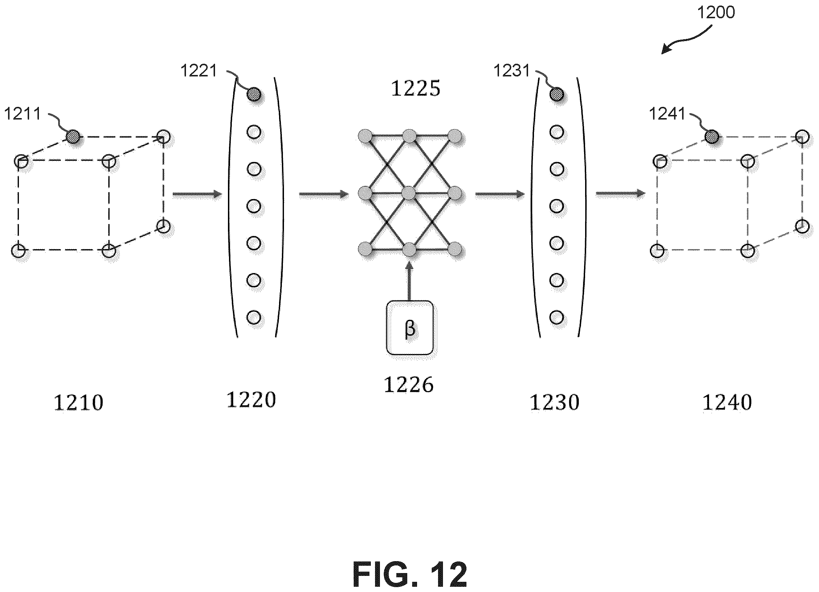

FIG. 12 is a flow diagram illustrating an example 1200 of a skinning network that predicts a set of bone transformation for a point in three-dimensions according to one or more embodiments of the present disclosure. As illustrated in FIG. 12, the skinning network S, that predicts the set of bone transformations B = {$B_1$, ..., $B_{n_b}$ |$B_i \in$ SE(3)} with $n_b$ the number of bones for any point in 3D, is conditioned on an identity latent code $\beta \in Z \subset R^m$. More precisely, a set of points (e.g., 1211) in pose space 1210 may be used as input 1220 (coordinates 1221 are the coordinates of point 1211) of a neural network 1225 conditioned on the identity latent code 1226. Conditioning in this context means that the behavior of the occupancy or skinning neural network is altered based on the latent vector. This may be done, for example, by concatenating the latent vector with the input, by modifying or deriving the weights of the network by a function taking as input the latent vector, and/or by activating or deactivating parts of the neural network based on the value of the latent vector.

The neural network 1225 outputs the corresponding LBS weights 1230 of these points (weight 1231 for the example point 1211). These LBS weights correspond to the weights 1240 at these positions in space (weight 1241 for the example point 1211). When trilinear interpolation is used, the interpolation results in the following expression (8):

$$(8) \quad T : R^3 \times SE(3)_{n_b} \rightarrow SE(3)$$

$$x, B \mapsto: \sum_{i=0}^{n_b} S(x; \beta)_i \cdot B_i$$

The expression (8) may be used to directly obtain the transformation for a point. In a variant and as in Fast-SNARF, the transformation at x_c may be approximated with its trilinear interpolation as defined by expression (9):

$$(9) \quad x_p = T(x_c) \cdot x_c$$

$$= \mathrm{Trilerp}\big(T(\mathcal{N}_1), \dots, T(\mathcal{N}_8)\big) \cdot x_c$$

The architecture of the neural network 1225 may include four fully connected layers of size 128 with softplus activation for the first three layers. The identity parameter $\beta$ (also referred to as "identity vector" or "latent code") goes through a single layer before being concatenated with the input voxel point. The output is a vector of size $n_b$ = 24 corresponding to the skinning weights. Alternatively, the identity parameter $\beta$ may be directly concatenated to the input. The identity parameter $\beta$ may also be transformed by any function, including multiple neural layers.

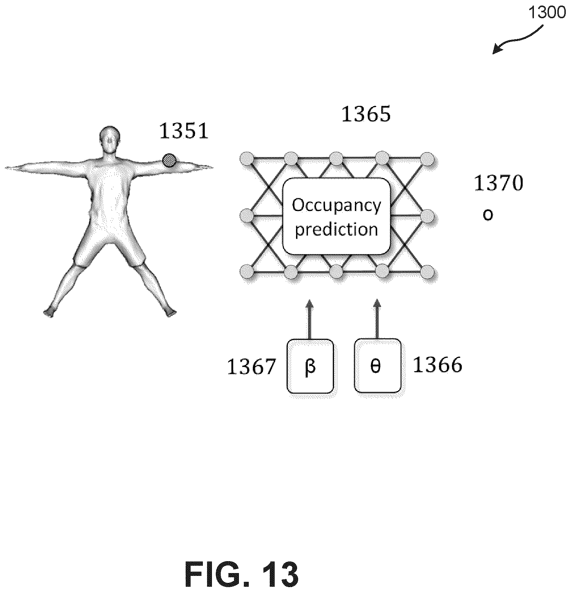

After the canonical correspondences $\{x_1, \dots x_n\}$ are found (there should only be several canonical roots when body parts are self-intersecting), an occupancy probability of each of the canonical correspondences is predicted by the neural network $\mathcal{O}_\psi$. FIG. 13 is a flow diagram illustrating an example 1300 of an occupancy network 1365 according to one or more embodiments of the present disclosure. As illustrated in FIG. 13, the occupancy network 1365 is conditioned on both the identity with the identity latent code $\beta$ 1367 (same that for the LBS network) and the SMPL pose parameter 1366, which is composed of the rotation vectors of each bone and hence of size $3 \cdot n_b$. The result for the occupancy 1370 of a point 1351 in canonical space is given as the maximum of the previous occupancy as defined by expression (10):

$$(104) \quad \mathcal{O}_\psi : R^3 \times \mathcal{Z} \times \mathcal{Y} \to R$$

$$x, \beta, \theta \mapsto : o$$

The architecture of the occupancy network 1365 is similar to the skinning network 1225, but with eight layers instead of four layers. The first and last layers of the eight layers are of size 256 while the other six layers are of size 512. Finally, the identity parameter 1367 and the pose parameter 1366 are both embedded with a single layer of output size 8 and added at different stage. The identity is concatenated with the second layer while the pose is added at the sixth layer. In some examples, the architecture of the occupancy network 1365 does not concatenate the identity parameter 1367 and the pose parameter 1366 at the same time because concatenating both at the same time may decrease the quality because the occupancy network 1365 may struggle to disentangle the identity parameter 1367 and the pose parameter 1366.

Both networks $S$ and $O$ may be trained simultaneously using a dataset containing pairs comprising one skeleton pose (the pose, used as input to the model) and one three-dimensional mesh associated to the skeleton (the 3D mesh of that person in that pose, used as target output to train the model). Each pair may also be associated to an identity identifier, so that poses of the same person can be identified. The meshes may have any topology. For example, the meshes may be from a dataset of synthetically generated meshes, a dataset of meshes generated by humans, and/or a dataset of meshes generated by capturing video and/or picture of people and extracting meshes from these videos/pictures. The skeleton may be automatically generated from the mesh, extracted separately from the video or be available with the mesh, for example for synthetic data sets.

Starting from such a set of three-dimensional meshes, points (e.g., thousands or tens of thousands of points) may be sampled uniformly in space while another set of points (e.g., thousands or tens of thousands of points) are sampled close to the surface of the mesh. In some examples, the occupancy of each sampled point is pre-calculated and stored beforehand to reduce the computational cost during training. In some examples, the predicted and ground truth occupancy is compared during training as generating the entire mesh may not add more information while taking more time.

The main loss may be a Binary Cross Entropy (BCE) between both occupancies. Fast-SNARF also added two secondary losses to guide the networks at the beginning of the training: the first secondary loss is a Mean Squared Error (MSE) loss to ensure that the predicted skinning weight at joints position is "one" only for that joint. The second secondary loss is a BCE to force the occupancy prediction of points on the bones to be "one." The method of the present disclosure may use the secondary losses in a manner that is similar to Fast-SNARF.

In a variant, additional losses may be used to regularize the identity latent space when it is learned. Additional losses may be defined by expressions (11) and (12):

$$(11) \quad \mathcal{L}_m = \sum(\beta_i)$$

$$(12) \quad \mathcal{L}_v = \left\| \beta_i \right\|_2^2 - 1$$

Expression (11) ensures that the mean of all points is around zero while Expression (12) pushes each point on the n-dimensional unit sphere. Thus, the points should all be uniformly spaced on the unit sphere and any points sampled on it should be well defined for the model. Another possible variant would make the norm of each latent point equal to the scale / height of the character and optimize them jointly.

With respect to gDNA, the present disclosure may also use the SMPL beta parameters. For example, the SMPL beta parameters may be precomputed. However, in gDNA, the morphology parameter is not used to condition an occupancy network on the full identity, as explained above, but to represent only shape variations such as e.g., the height of an avatar. Additionally, with respect to gDNA, the pose parameter is the same as in Fast-SNARF and the present disclosure.

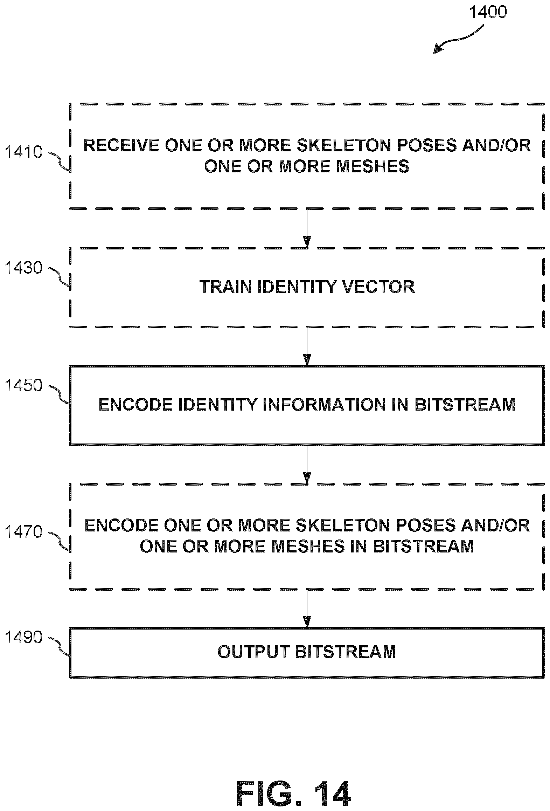

FIG. 14 is a flow diagram illustrating a method 1400 of encoding a surface of a non-rigid articulated object according to one or more embodiments of the present disclosure. The method 1400 may be performed by the encoder/decoder module 130 of FIG. 1, the video encoder 200 of FIG. 2, or any other suitable encoder.

To encode a surface of a non-rigid articulated object, the method 1400 includes encoding identity information in a bitstream (at block 1450) and outputting the encoded bitstream (at block 1490). In some examples, the identity information includes one of an identity vector or an instruction to use a pre-existing identity vector, the identity vector and the pre-existing identity vector are individually configured to condition a skinning network, an occupancy network, or both.

For example, the parameters of the identity vector $\beta$ may be encoded using any off-the-shelf method and may involve the use of entropy coders. In particular, as the parameters of the identity vector $\beta$ are input tensors of neural networks, the parameters of the identity vector $\beta$ may be encoded using existing codec specialized to encode such parameters such as MPEG-NNC. The encoding techniques of these parameters may be standardized and known both to the encoder and decoder.

Additionally, in some examples, the method 1400 may also include receiving one or more skeleton poses and/or one or more meshes (at optional block 1410) and training, with a machine learning algorithm, the identity vector, and the one or more skeleton poses and/or the one or more meshes are input data to the machine learning algorithm and are associated with the identity vector (at optional block 1430). The optimization of the identity vector $\beta$ may be performed by a machine learning approach such as a batch gradient descent method, but any of-the-shelf optimization algorithm may be used for the optimization of the identity vector $\beta$.

Additionally, in some examples, the method 1400 may also include encoding the one or more skeleton poses and/or the one or more meshes in the bitstream (at optional block 1470). This encoding may involve the use of entropy coders. Any of-the-shelf skeleton encoding algorithm may be used for this encoding, including using MPEG-NNC. In other examples, the one or more skeleton poses and/or the one or more meshes may extracted from an input video using any off-the-shelf algorithm.

In some examples, only the identity vector $\beta$ is encoded, for example when the skeleton poses that will be used to generate implicit avatars will be captured live and are thus not available during training. In some examples, the identity vector $\beta$ may not be encoded but used directly.

In some examples, the identity vector $\beta$ and the avatar representations of an individual may be trained using another representation of the shape of the avatars, such as a point cloud or the 2D outline of that shape, which for example, may be extracted from image data (e.g., a video).

In some examples, the pre-existing identity vector is the identify vector $\beta$ (of the individual whose meshes are encoded) that has been trained in a previous session. In other examples, this already available identify vector $\beta$ (i.e., the pre-existing identity vector) may have been precomputed.

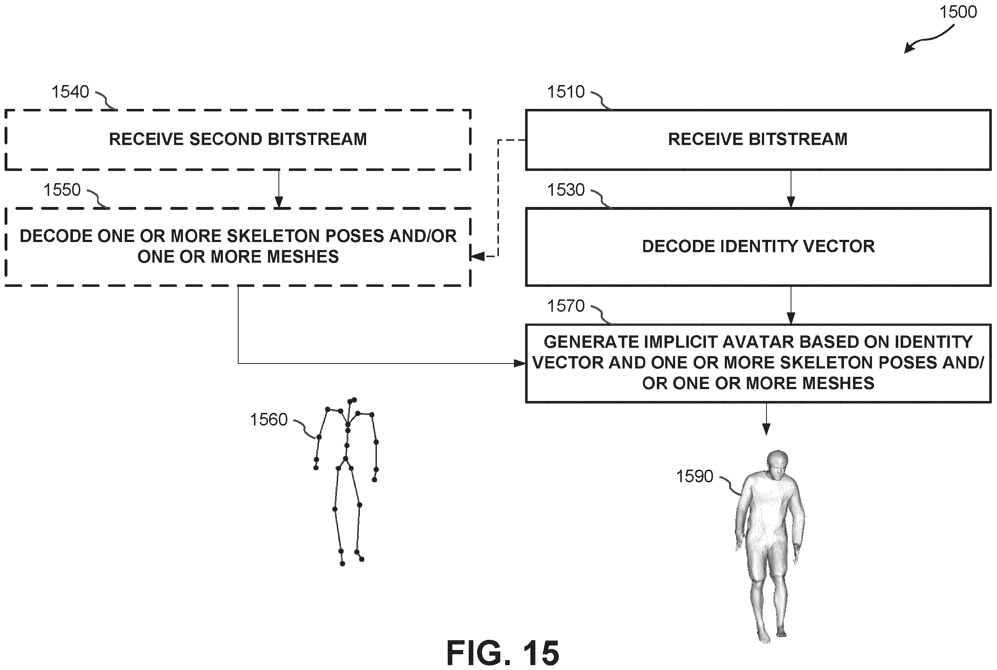

The resulting bitstream can be decoded to generate implicit avatars. FIG. 15 is a flow diagram illustrating a method 1500 of decoding a surface of a non-rigid articulated object according to one or more embodiments of the present disclosure. The method 1500 may be performed by the encoder/decoder module 130 of FIG. 1, the video decoder 300 of FIG. 3, or any other suitable decoder.

To decode a surface of a non-rigid articulated object, the method 1500 includes receiving a bitstream (at block 1510), decoding an identity vector from the bitstream (at block 1530), and generating an implicit avatar 1590 based on the identity vector and one or more skeleton poses and/or one or more meshes (at block 1570). In some examples, from the input bitstream 1510, the identity vector $\beta$ may be decoded (at block 1530) with entropy decoders.

Additionally, in some examples, the method 1500 may also include decoding one or more skeleton poses and/or one or more meshes from a bitstream (at optional block 1550). In some examples, the one or more skeleton poses (1560) and/or the one or more meshes may be decoded from the bitstream with entropy decoders.

In some examples, the bitstream may be the same bitstream from which the identity vector was decoded (at block 1530). In other examples, the bitstream may be a second bitstream that is received in parallel (at optional block 1540) to receiving the bitstream (at block 1510).

In some examples, generating the implicit avatar 1590 based on the identity vector and one or more skeleton poses and/or one or more meshes further includes using each skeleton pose as an input for the skinning and occupancy networks and an implicit avatar 1590 is reconstructed as described above. Note that for the purpose of illustration, the avatar 1590 has additionally been rendered in FIG. 15.

In some examples, the decoder is instantiated by loading the LBS network and the occupancy network from a memory or by decoding the LBS network and the occupancy network from one of the bitstreams or from a third bitstream. In some examples, an identifier for either the LBS network, the occupancy network, or both is decoded from one of the bitstreams to identify the proper network(s) used to instantiate the decoder.

In some examples, the skeleton poses are not decoded from a bitstream but extracted from a video of one person.

In some examples, the identity vector $\beta$ may be available beforehand, for example because the system is generating implicit avatars for an individual whose identity vector has been used in a previous session.

Additionally, while "avatar" is illustrated as human avatars (avatar 1590), an "avatar" and the functionality described herein with respect to such an "avatar" is also applicable to other categories of objects or living beings, such as plants, animals, cars, robots, tools, machines, etc.

One or more embodiments provide a computer program comprising instructions which when executed by one or more processors cause such processors to perform the encoding and/or decoding methods according to any of the embodiments described above. One or more embodiments also provide a computer readable storage medium having stored thereon instructions for encoding or decoding video data according to the methods described above.

One or more embodiments provide a computer readable storage medium having stored thereon video data generated according to the methods described above. One or more embodiments also provide a method and apparatus for transmitting or receiving video data generated according to the methods described above.

The embodiments described herein may be implemented in, for example, a method or a process, an apparatus, a software program, a data stream, or a signal. Even if only discussed in the context of a single form of implementation (e.g., as a method), the implementation of such features may also be implemented in other forms. An apparatus may be implemented in, for example, appropriate hardware, software, and firmware. Corresponding methods may be implemented in, for example, a processor.

The following are enumerated examples of the various methods, devices, and non-transitory computer-readable media of the present disclosure. Example 1: a method of encoding a surface of a non-rigid articulated object, the method comprising: signaling identity vector information in an encoded bitstream, the identity vector information including one of an identity vector or an instruction to use a pre-existing identity vector, the identity vector and the pre-existing identity vector are individually configured to condition a skinning network, an occupancy network, or both.

Example 2: the method of Example 1, further comprising: signaling one or more skeleton poses that are associated with the identity vector or the pre-existing identity vector in the encoded bitstream.

Example 3: the method of Examples 1 or 2, further comprising: signaling one or more meshes that are associated with the identity vector or the pre-existing identity vector in the encoded bitstream.

Example 4: the method of any of Example 1-3, further comprising: receiving one or more skeleton poses and one or more meshes; and training, with a machine learning algorithm, the identity vector, wherein the one or more skeleton poses and the one or more meshes are input data to the machine learning algorithm and are associated with the identity vector.

Example 5: the method of Example 4, wherein the machine learning algorithm is a batch gradient descent method.

Example 6: the method of Examples 4 or 5, further comprising: extracting the one or more skeleton poses and the one or more meshes from a video.

Example 7: the method of any of Example 1-6, wherein signaling identity vector information in an encoded bitstream further includes signaling, with entropy coders, the identity vector information in the encoded bitstream.

Example 8: the method of any of Example 1-7, wherein the encoded bitstream is an MPEG-NNC encoded bitstream.

Example 9: the method of any of Example 1-8, wherein the pre-existing identity vector is a second identity vector that was previously signaled in the encoded bitstream.

Example 10: the method of any of Example 1-9, wherein the pre-existing identity vector is a second identity vector that has been obtained separately by processing a representation of a user from a video, picture or point cloud or has been previously configured by a second user.

Example 11: the method of any of Example 1-10, further comprising: signaling the skinning network, the occupancy network, or both in the encoded bitstream.

Example 12: a device comprising: a video encoder configured to signal identity vector information in an encoded bitstream, the identity vector information including one of an identity vector or an instruction to use a pre-existing identity vector, the identity vector and the pre-existing identity vector are individually configured to condition a skinning network, an occupancy network, or both.

Example 13: the device of Example 12, wherein the video encoder is further configured to signal one or more skeleton poses that are associated with the identity vector or the pre-existing identity vector in the encoded bitstream.

Example 14: the device of Examples 12 or 13, wherein the video encoder is further configured to signal one or more meshes that are associated with the identity vector or the pre-existing identity vector in the encoded bitstream.

Example 15: the device of any of Examples 12-14, wherein the video encoder is further configured to: receive one or more skeleton poses and one or more meshes, and train, with a machine learning algorithm, the identity vector, wherein the one or more skeleton poses and the one or more meshes are input data to the machine learning algorithm and are associated with the identity vector.

Example 16: the device of Example 15, wherein the machine learning algorithm is a batch gradient descent method.

Example 17: the device of Examples 15 or 16, wherein the video encoder is further configured to extract the one or more skeleton poses and the one or more meshes from a video.

Example 18: the device of any of Examples 12-17, wherein, to signal identity vector information in an encoded bitstream, the video encoder is further configured to signal, with entropy coders, the identity vector information in the encoded bitstream.

Example 19: the device of any of Examples 12-18, wherein the encoded bitstream is an MPEG-NNC encoded bitstream.

Example 20: the device of any of Examples 12-19, wherein the pre-existing identity vector is a second identity vector that was previously signaled in the encoded bitstream.

Example 21: the device of any of Examples 12-20, wherein the pre-existing identity vector is a second identity vector that has been obtained separately by processing a representation of a user, such as a video, picture or point cloud or has been previously configured by a second user.

Example 22: the device of any of Examples 12-21, wherein the video encoder is further configured to signal the skinning network, the occupancy network, or both in the encoded bitstream.

Example 23: a non-transitory computer-readable medium comprising instructions that, when executed by an electronic processor cause the electronic processor to perform a set of operations comprising: signaling identity vector information in an encoded bitstream, the identity vector information including one of an identity vector or an instruction to use a pre-existing identity vector, the identity vector and the pre-existing identity vector are individually configured to condition a skinning network, an occupancy network, or both.

Example 24: the non-transitory computer-readable medium of Example 23, wherein the set of operations further includes signaling one or more skeleton poses that are associated with the identity vector or the pre-existing identity vector in the encoded bitstream.

Example 25: the non-transitory computer-readable medium of Examples 23 or 24, wherein the set of operations further includes signaling one or more meshes that are associated with the identity vector or the pre-existing identity vector in the encoded bitstream.

Example 26: the non-transitory computer-readable medium of any of Examples 23-25, wherein the set of operations further includes receiving one or more skeleton poses and one or more meshes; and training, with a machine learning algorithm, the identity vector, wherein the one or more skeleton poses and the one or more meshes are input data to the machine learning algorithm and are associated with the identity vector.

Example 27: the non-transitory computer-readable medium of Example 26, wherein the machine learning algorithm is a batch gradient descent method.

Example 28: the non-transitory computer-readable medium of Examples 26 or 27, wherein the set of operations further includes extracting the one or more skeleton poses and the one or more meshes from a video.

Example 29: the non-transitory computer-readable medium of any of Examples 23-28, wherein signaling identity vector information in an encoded bitstream further includes signaling, with entropy coders, the identity vector information in the encoded bitstream.

Example 30: the non-transitory computer-readable medium of any of Examples 23-29, wherein the encoded bitstream is an MPEG-NNC encoded bitstream.

Example 31: the non-transitory computer-readable medium of any of Examples 23-30, wherein the pre-existing identity vector is a second identity vector that was previously signaled in the encoded bitstream.

Example 32: the non-transitory computer-readable medium of any of Examples 23-31, wherein the pre-existing identity vector is a second identity vector that has been obtained separately by processing a representation of a user, such as a video, picture or point cloud or has been previously configured by a second user.

Example 33: the non-transitory computer-readable medium of any of Examples 23-32, wherein the set of operations further includes signaling the skinning network, the occupancy network, or both in the encoded bitstream.

Example 34: a method of decoding a surface of a non-rigid articulated object, the method comprising: decoding identity vector information in an encoded bitstream, the identity vector information including one of an identity vector or an instruction to use a pre-existing identity

vector, the identity vector and the pre-existing identity vector are individually configured to condition a skinning network, an occupancy network, or both.

Example 35: the method of Example 34, further comprising: acquiring a skeleton pose; and generating an implicit avatar based on the identity vector information that is decoded and the skeleton pose that is acquired.

Example 36: the method of Example 35, wherein acquiring the skeleton pose further includes decoding the skeleton pose in the encoded bitstream.

Example 37: the method of Example 35, wherein acquiring the skeleton pose further includes extracting the skeleton pose from a video of a humanoid figure.

Example 38: the method of any of Examples 35-37, wherein generating the implicit avatar based on the identity vector information that is decoded and the skeleton pose that is acquired further includes determining whether the identity vector information includes the identity vector or the instruction to use the pre-existing identity vector, responsive to determining that the identity vector information includes the identity vector, acquiring the skinning network, the occupancy network, or both, conditioning the skinning network, the occupancy network, or both with the identity vector, and generating the implicit avatar based on the skinning network, the occupancy network, or both that are conditioned by the identity vector.

Example 39: the method of Example 38, wherein acquiring the skinning network, the occupancy network, or both further includes decoding the skinning network, the occupancy network, or both from the encoded bitstream.

Example 40: the method of Example 38, wherein acquiring the skinning network, the occupancy network, or both further includes retrieving and loading the skinning network, the occupancy network, or both from a memory.

Example 41: the method of any of Examples 35-40, wherein generating the implicit avatar based on the identity vector information that is decoded and the skeleton pose that is acquired further includes determining whether the identity vector information includes the identity vector or the instruction to use the pre-existing identity vector, responsive to determining that the identity vector information includes the instruction to use the pre-existing identity vector, retrieving the pre-existing identity vector from a memory and acquiring the skinning network, the occupancy network, or both, conditioning the skinning network, the occupancy network, or both with the pre-existing identity vector that is retrieved, and generating the implicit avatar based on the skinning network, the occupancy network, or both that are conditioned by the pre-existing identity vector.

Example 42: the method of Example 41, wherein acquiring the skinning network, the occupancy network, or both further includes decoding the skinning network, the occupancy network, or both from the encoded bitstream.

Example 43: the method of Example 41, wherein acquiring the skinning network, the occupancy network, or both further includes retrieving and loading the skinning network, the occupancy network, or both from a second memory.

Example 44: a device comprising: a video decoder configured to decode identity vector information in an encoded bitstream, the identity vector information including one of an identity vector or an instruction to use a pre-existing identity vector, the identity vector and the pre-existing identity vector are individually configured to condition a skinning network, an occupancy network, or both.

Example 45: the device of Example 44, wherein the video decoder is further configured to: acquire a skeleton pose, and generate an implicit avatar based on the identity vector information that is decoded and the skeleton pose that is acquired.

Example 46: the device of Example 45, wherein, to acquire the skeleton pose, the video decoder is further configured to decode the skeleton pose in the encoded bitstream.

Example 47: the device of Example 45, wherein, to acquire the skeleton pose, the video decoder is further configured to extract the skeleton pose from a video of a humanoid figure.

Example 48: the device of any of Examples 45-47, wherein, to generate the implicit avatar based on the identity vector information that is decoded and the skeleton pose that is acquired, the video decoder is further configured to: determine whether the identity vector information includes the identity vector or the instruction to use the pre-existing identity vector, responsive to determining that the identity vector information includes the identity vector, acquire the skinning network, the occupancy network, or both, condition the skinning network, the occupancy network, or both with the identity vector, and generate the implicit avatar based on the skinning network, the occupancy network, or both that are conditioned by the identity vector.

Example 49: the device of Example 48, wherein, to acquire the skinning network, the occupancy network, or both, the video decoder is further configured to decode the skinning network, the occupancy network, or both from the encoded bitstream.

Example 50: the device of Example 48, wherein, to acquire the skinning network, the occupancy network, or both, the video decoder is further configured to retrieve and load the skinning network, the occupancy network, or both from a memory.

Example 51: the device of any of Examples 45-50, wherein, to generate the implicit avatar based on the identity vector information that is decoded and the skeleton pose that is acquired, the video decoder is further configured to: determine whether the identity vector information includes the identity vector or the instruction to use the pre-existing identity vector, responsive to determining that the identity vector information includes the instruction to use the pre-existing identity vector, retrieve the pre-existing identity vector from a memory and acquiring the skinning network, the occupancy network, or both, condition the skinning network, the occupancy network, or both with the pre-existing identity vector that is retrieved, and generate the implicit avatar based on the skinning network, the occupancy network, or both that are conditioned by the pre-existing identity vector.

Example 52: the device of Example 51, wherein, to acquire the skinning network, the occupancy network, or both, the video decoder is further configured to decode the skinning network, the occupancy network, or both from the encoded bitstream.

Example 53: the device of Example 51, wherein, to acquire the skinning network, the occupancy network, or both, the video decoder is further configured to retrieve and load the skinning network, the occupancy network, or both from a second memory.

Example 54: a non-transitory computer-readable medium comprising instructions that, when executed by an electronic processor cause the electronic processor to perform a set of operations comprising: decoding identity vector information in an encoded bitstream, the identity vector information including one of an identity vector or an instruction to use a pre-existing identity vector, the identity vector and the pre-existing identity vector are individually configured to condition a skinning network, an occupancy network, or both.

Example 55: the non-transitory computer-readable medium of Example 54, further comprising: acquiring a skeleton pose; and generating an implicit avatar based on the identity vector information that is decoded and the skeleton pose that is acquired.

Example 56: the non-transitory computer-readable medium of Example 55, wherein acquiring the skeleton pose further includes decoding the skeleton pose in the encoded bitstream.

Example 57: the non-transitory computer-readable medium of Example 55, wherein acquiring the skeleton pose further includes extracting the skeleton pose from a video of a humanoid figure.

Example 58: the non-transitory computer-readable medium of any of Examples 55-57, wherein generating the implicit avatar based on the identity vector information that is decoded and the skeleton pose that is acquired further includes determining whether the identity vector information includes the identity vector or the instruction to use the pre-existing identity vector, responsive to determining that the identity vector information includes the identity vector, acquiring the skinning network, the occupancy network, or both, conditioning the skinning network, the occupancy network, or both with the identity vector, and generating the implicit avatar based on the skinning network, the occupancy network, or both that are conditioned by the identity vector.

Example 59: the non-transitory computer-readable medium of Example 58, wherein acquiring the skinning network, the occupancy network, or both further includes decoding the skinning network, the occupancy network, or both from the encoded bitstream.

Example 60: the non-transitory computer-readable medium of Example 58, wherein acquiring the skinning network, the occupancy network, or both further includes retrieving and loading the skinning network, the occupancy network, or both from a memory.

Example 61: the non-transitory computer-readable medium of any of Examples 55-60, wherein generating the implicit avatar based on the identity vector information that is decoded and the skeleton pose that is acquired further includes determining whether the identity vector information includes the identity vector or the instruction to use the pre-existing identity vector, responsive to determining that the identity vector information includes the instruction to use the pre-existing identity vector, retrieving the pre-existing identity vector from a memory and acquiring the skinning network, the occupancy network, or both, conditioning the skinning network, the occupancy network, or both with the pre-existing identity vector that is retrieved, and generating the implicit avatar based on the skinning network, the occupancy network, or both that are conditioned by the pre-existing identity vector.

Example 62: the non-transitory computer-readable medium of Example 61, wherein acquiring the skinning network, the occupancy network, or both further includes decoding the skinning network, the occupancy network, or both from the encoded bitstream.

Example 63: the non-transitory computer-readable medium of Example 61, wherein acquiring the skinning network, the occupancy network, or both further includes retrieving and loading the skinning network, the occupancy network, or both from a second memory.

Various methods and aspects described herein can be used to modify one or more modules. For example, the intra predictors and inter predictors described with respect to FIGS. 2 and 3 may be implemented as one or more modules and modified according to the various embodiments of the present disclosure.

The various embodiments described herein provide at least the following features, devices, or aspects, alone or on any combination, across various claim categories and types:

i. Encoding, into coded video data, syntax elements that can enable the decoder to decode the coded video data, according to any of the embodiments described herein.

ii. A bitstream that includes one or more of the described syntax elements, or variations thereof, whether transmitted, stored, or otherwise made available.

iii. Creating, transmitting, receiving, and/or decoding of the bitstream.

iv. An electronic device (e.g., TV, set-top box, mobile phone, tablet, etc.) that tunes a channel to receive a bitstream or that receives such bitstream over the air. The electronic device decodes the syntax elements from the bitstream, and, optionally, displays (e.g., via a monitor or other type of display) a resulting image.

Various numeric values are used in the present application. Such specific values are for example purposes and the embodiments described are not limited to these specific values.

Various methods are described herein, and such methods comprise one or more steps or actions for achieving the described method. Unless a specific order of steps or actions is required for the proper operation of the method, the order and/or use of specific steps and/or actions may be modified or combined. Additionally, terms such as "first", "second", etc. may be used in various embodiments to modify an element, component, step, operation, etc., for example, a "first decoding" and a "second decoding". Use of such terms does not imply an order to the operations unless specifically required.

The present disclosure may refer to "determining" various pieces of information. Determining information may include one or more of, for example, estimating, calculating, predicting, or retrieving (e.g., from memory) the information.

The present disclosure may refer to "accessing" various pieces of information. Accessing information may include one or more of, for example, receiving, retrieving (e.g., from memory), storing, moving, copying, calculating, determining, predicting, or estimating the information. Similarly, the present disclosure may refer to "receiving" various pieces of information. Receiving information may include one or more of, for example, accessing or retrieving (e.g., from memory) the information.

"Decoding," as used herein, encompasses all or part of the processes performed, for example, on an encoded sequence to produce an output suitable for display. In some embodiments, such processes include one or more of the processes typically performed by a decoder, for example, entropy decoding, inverse quantization, etc. Whether the phrase "decoding process" is intended to refer to a subset of operations or generally to the broader decoding process will be clear based on the context of the specific description and will be well understood by those skilled in the art.

"Encoding," as used herein, encompasses all or part of the processes performed, for example, on input video data an order to produce an encoded bitstream. Additionally, the terms "reconstructed" and "decoded" may be used interchangeably, the terms "encoded" or "coded" may be used interchangeably, the terms "image," "picture," "sub-picture," "slice," and "frame" may be used interchangeably, and the terms "pixel" and "sample" may be used interchangeably.

The present disclosure refers to information, for example, syntax elements, that can be transmitted or stored. Such information can be packaged or arranged in a variety of manners, including for example manners common in video standards such as putting the information into a sequence parameter set (SPS), a picture parameter set (PPS), a network abstraction layer (NAL) unit, a header (for example, a NAL unit header, or a slice header), or an SEI message. Other manners are also available, including, for example, manners that are common for system level or application-level standards such as signaling the information into one or more of the following:

> i. session description protocol (SDP), for example as described in RFCs and/or used in conjunction with real-time transport protocol (RTP) transmission.

> ii. hypertext transfer protocol (HTTP) live Streaming (HLS) manifest transmitted over HTTP.

> iii. dynamic adaptive streaming over HTTP (DASH) media presentation description (MPD) descriptors, for example as used in DASH and transmitted over HTTP.

> iv. RTP header extensions, for example as used during RTP streaming.

> v. International Organization for Standardization (ISO) base media file format, for example, as used in Omnidirectional MediA Format (OMAF).

As used herein, "signal" and "signaling" refer to, among other things, indicating information to a decoder. For example, in some embodiments the encoder signals a quantization matrix for de-quantization, whereby the same parameter is used for both encoding and decoding. In some embodiments, the signaling may be explicit, such that information (e.g., a particular parameter) is transmitted to the decoder enabling the decoder to use the same particular parameter. In some embodiments, the signaling may be implicit, in that the information (e.g., a particular parameter) is indicated based on other information at or transmitted to the decoder or derived or selected by the decoder based on information available at the decoder. By not transmitting the information (e.g., the particular parameter), a bit savings is thus realized in some embodiments. In some embodiments, one or more syntax elements or flags are used to signal information to a decoder. While the preceding relates to the verb form of the word "signal", the word "signal" can also be used herein as a noun.

In some embodiments, signals may be produced that are formatted to carry information that may be stored or transmitted. Such information may include, for example, instructions for performing a method, or data produced by one of the described implementations (e.g., a bitstream of a described embodiment). Such a signal may be formatted, for example, as an electromagnetic wave or as a baseband signal. The formatting may include, for example, encoding a data stream and modulating a carrier with the encoded data stream. The information that the signal carries may be, for example, analog or digital information. The signal may be transmitted over a variety of different wired or wireless links and may be stored on a processor-readable medium.

It is to be understood that use of any of the following "/", "and/or", and "at least one of" is intended to encompass all possible selections of listed items, taken either individually or in any combination thereof.

While specific embodiments have been described in the foregoing description in connection with the accompanying drawings, it should be understood that embodiments described herein are examples only and should not be taken as limiting the scope of the present disclosure or the following claims. Although features and elements are described herein in particular combinations, those of ordinary skill in the art will appreciate that such features or elements may be used alone or in any combination with the other features and elements. It is understood, therefore, that the overall teachings of the present disclosure are not limited to the particular embodiments, implementations, and examples disclosed herein, but are intended to cover variations, modifications, and alternatives as defined by the appended claims and any and all equivalents thereof.

## Claims

1. A method of encoding a surface of a non-rigid articulated object, the method comprising:
signaling identity vector information in an encoded bitstream, the identity vector information including one of an identity vector or an instruction to use a pre-existing identity vector, the identity vector and the pre-existing identity vector are individually configured to condition a skinning network, an occupancy network, or both.

2. The method of claim 1, further comprising:
signaling one or more skeleton poses that are associated with the identity vector or the pre-existing identity vector in the encoded bitstream.

3. The method of claim 1, further comprising:
signaling one or more meshes that are associated with the identity vector or the pre-existing identity vector in the encoded bitstream.

4. The method of claim 1, further comprising:

   receiving one or more skeleton poses and one or more meshes; and
   training, with a machine learning algorithm, the identity vector,
   wherein the one or more skeleton poses and the one or more meshes are input data to the machine learning algorithm and are associated with the identity vector.

5. The method of claim 1, wherein the pre-existing identity vector is a second identity vector that was previously signaled in the encoded bitstream.

6. The method of claim 1, wherein the pre-existing identity vector is a second identity vector that has been obtained separately by processing a representation of a user from a video, picture or point cloud, or has been previously configured by a second user.

7. The method of claim 1, further comprising:
signaling the skinning network, the occupancy network, or both in the encoded bitstream.

8. A device comprising a video encoder configured to perform the method of any of claims 1-7.

9. A method of decoding a surface of a non-rigid articulated object, the method comprising:
decoding identity vector information in an encoded bitstream, the identity vector information including one of an identity vector or an instruction to use a pre-existing identity vector, the identity vector and the pre-existing identity vector are individually configured to condition a skinning network, an occupancy network, or both.

10. The method of claim 9, further comprising:

   acquiring a skeleton pose; and
   generating an implicit avatar based on the identity vector information that is decoded and the skeleton pose that is acquired.

11. The method of claim 10, wherein acquiring the skeleton pose further includes decoding the skeleton pose in the encoded bitstream.

12. The method of claim 10, wherein acquiring the skeleton pose further includes extracting the skeleton pose from a video of a humanoid figure.

13. The method of claim 10, wherein generating the implicit avatar based on the identity vector information that is decoded and the skeleton pose that is acquired further includes

determining whether the identity vector information includes the identity vector or the instruction to use the pre-existing identity vector,
responsive to determining that the identity vector information includes the identity vector, acquiring the skinning network, the occupancy network, or both,
conditioning the skinning network, the occupancy network, or both with the identity vector, and
generating the implicit avatar based on the skinning network, the occupancy network, or both that are conditioned by the identity vector.

14. The method of claim 10, wherein generating the implicit avatar based on the identity vector information that is decoded and the skeleton pose that is acquired further includes

determining whether the identity vector information includes the identity vector or the instruction to use the pre-existing identity vector,
responsive to determining that the identity vector information includes the instruction to use the pre-existing identity vector, retrieving the pre-existing identity vector from a memory and acquiring the skinning network, the occupancy network, or both,
conditioning the skinning network, the occupancy network, or both with the pre-existing identity vector that is retrieved, and
generating the implicit avatar based on the skinning network, the occupancy network, or both that are conditioned by the pre-existing identity vector.

15. A device comprising a video decoder configured to perform the method of any of claims 9-14.

**FIG. 1**

EP 4 723 642 A1

FIG. 2

**FIG. 3**

FIG. 4

EP 4 723 642 A1

500

input signal 510

520

Learn INR parameters

530

Encode INR parameters

bitstream 550

**FIG. 5**

600

630

610

650

x

y

r

g

b

620

640

**FIG. 6**

EP 4 723 642 A1

711

721

700

LBS module

715

710

720

Occupancy network

725

730

731

**FIG. 7**

800

841

811

831

821

810 820 825 830 840

**FIG. 8**

900

Voxel grid
$\bullet \in \mathbb{R}^3$

910

Transformation
$\bullet \in \mathbb{R}^{3 \times 4}$

950

951

Skinning weight
$\bullet \in \mathbb{R}^{n_b}$

LBS

$$\bullet = \sum_{i=0}^{n_b} \bullet [i] * B_i$$

945

925

940

**FIG. 9**

**FIG. 10**

1151

1165

1170

o

Occupancy prediction

θ 1166

**FIG. 11**

EP 4 723 642 A1

**FIG. 12**

EP 4 723 642 A1

1300

1351

1365

Occupancy prediction

1370

o

1367 β

θ 1366

**FIG. 13**

1400

```
┌ ─ ─ ─ ─ ─ ─ ─ ─ ─ ─ ─ ─ ─ ─ ─ ─ ─ ─ ─ ─ ┐
│  RECEIVE ONE OR MORE SKELETON POSES AND/OR  │   1410
│           ONE OR MORE MESHES               │
└ ─ ─ ─ ─ ─ ─ ─ ─ ─ ─ ─ ─ ─ ─ ─ ─ ─ ─ ─ ─ ┘

┌ ─ ─ ─ ─ ─ ─ ─ ─ ─ ─ ─ ─ ─ ─ ─ ─ ─ ─ ─ ─ ┐
│           TRAIN IDENTITY VECTOR            │   1430
└ ─ ─ ─ ─ ─ ─ ─ ─ ─ ─ ─ ─ ─ ─ ─ ─ ─ ─ ─ ─ ┘

┌─────────────────────────────────────────┐
│   ENCODE IDENTITY INFORMATION IN BITSTREAM   │   1450
└─────────────────────────────────────────┘

┌ ─ ─ ─ ─ ─ ─ ─ ─ ─ ─ ─ ─ ─ ─ ─ ─ ─ ─ ─ ─ ┐
│  ENCODE ONE OR MORE SKELETON POSES AND/OR   │   1470
│       ONE OR MORE MESHES IN BITSTREAM      │
└ ─ ─ ─ ─ ─ ─ ─ ─ ─ ─ ─ ─ ─ ─ ─ ─ ─ ─ ─ ─ ┘

┌─────────────────────────────────────────┐
│             OUTPUT BITSTREAM              │   1490
└─────────────────────────────────────────┘
```

# FIG. 14

**FIG. 15**

EP 4 723 642 A1

**EUROPEAN SEARCH REPORT**

Europäisches
Patentamt
European
Patent Office
Office européen
des brevets

Application Number

EP 24 30 6616

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | TAEKSOO KIM ET AL: "NCHO: Unsupervised Learning for Neural 3D Composition of Humans and Objects", ARXIV.ORG, CORNELL UNIVERSITY LIBRARY, 201 OLIN LIBRARY CORNELL UNIVERSITY ITHACA, NY 14853, 23 May 2023 (2023-05-23), XP091516774, * sections 3, 4 and A.1 * ----- | 1-15 | INV. H04N19/597 G06T9/00 G06T13/40 G06T17/00 |
| X | JINLONG FAN ET AL: "AniPixel: Towards Animatable Pixel-Aligned Human Avatar", ARXIV.ORG, CORNELL UNIVERSITY LIBRARY, 201 OLIN LIBRARY CORNELL UNIVERSITY ITHACA, NY 14853, 17 October 2023 (2023-10-17), XP091636432, * the whole document * ----- | 1-15 | |
| X | FENG LIU ET AL: "Learning Clothing and Pose Invariant 3D Shape Representation for Long-Term Person Re-Identification", ARXIV.ORG, CORNELL UNIVERSITY LIBRARY, 201 OLIN LIBRARY CORNELL UNIVERSITY ITHACA, NY 14853, 21 September 2023 (2023-09-21), XP091619210, * the whole document * ----- | 1-15 | TECHNICAL FIELDS SEARCHED (IPC) H04N G06T |
| A | BINBIN XU ET AL: "Identity-Disentangled Neural Deformation Model for Dynamic Meshes", ARXIV.ORG, CORNELL UNIVERSITY LIBRARY, 201 OLIN LIBRARY CORNELL UNIVERSITY ITHACA, NY 14853, 30 September 2021 (2021-09-30), XP091060524, * the whole document * ----- | 1-15 | |

-/--

The present search report has been drawn up for all claims

| Place of search | Date of completion of the search | Examiner |
|---|---|---|
| The Hague | 20 February 2025 | André, Thomas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

# EUROPEAN SEARCH REPORT

**Europäisches Patentamt**
**European Patent Office**
**Office européen des brevets**

**Application Number**

EP 24 30 6616

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | YIHENG XIE ET AL: "Neural Fields in Visual Computing and Beyond", ARXIV.ORG, CORNELL UNIVERSITY LIBRARY, 201 OLIN LIBRARY CORNELL UNIVERSITY ITHACA, NY 14853, 22 November 2021 (2021-11-22), XP091100479, * sections 1, 6-8 and 12 * ----- | 1-15 | |

TECHNICAL FIELDS SEARCHED (IPC)

The present search report has been drawn up for all claims

| Place of search | Date of completion of the search | Examiner |
|---|---|---|
| The Hague | 20 February 2025 | André, Thomas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 2 of 2